# NEUE EUROPÄISCHE PATENTSCHRIFT

(11) **EP 2 938 975 B2**
(45) Veröffentlichungstag und Bekanntmachung des Hinweises auf die Entscheidung über den Einspruch: **23.11.2022**
(45) Hinweis auf die Patenterteilung: 27.11.2019
(21) Anmeldenummer: 14702795.7
(22) Anmeldetag: 30.01.2014
(51) Int. Cl.: G01G 11/00, G01G 21/28, G01G 21/23, B65B 1/46, B65B 59/04, B65B 65/00

(54) **GESTELL EINER WÄGE-FÖRDERVORRICHTUNG**
FRAME OF A WEIGHING/CONVEYING DEVICE
BÂTI D'UN DISPOSITIF DE TRANSPORT ET DE PESÉE

(30) Priorität: 28.02.2013 DE 102013203460
(43) Veröffentlichungstag der Anmeldung: 04.11.2015
(73) Patentinhaber: Bizerba SE & Co. KG, 72336 Balingen (DE)
(72) Erfinder: SCHWARZER, Dietmar, 78727 Oberndorf a. N. (DE); WEHRMANN, Johann, 72336 Balingen (DE); BERNHARD, Jürgen, 72186 Empfingen (DE)
(74) Vertreter: Manitz Finsterwald Patent- und Rechtsanwaltspartnerschaft mbB
(86) Internationale Anmeldenummer: PCT/EP2014/051834
(87) Internationale Veröffentlichungsnummer: WO 2014/131568

(56) Entgegenhaltungen:
- EP-A1- 1 524 210
- WO-A1-2011/030135
- JP-A- 2002 116 079

## Beschreibung

Die vorliegende Erfindung betrifft ein Gestell einer Wäge-Fördervorrichtung mit zwei stirnseitigen Seitenwangen und mehreren die beiden Seitenwangen verbindenden Längsträgern.

Aus dem Dokument DE 103 57 982 A1 ist ein Gestell einer Kontrollwaage mit einem zentralen tragenden zylindrischen Rohr als Längsteil bekannt, an dessen beiden Längsenden jeweils ein im Wesentlichen quadratisches Querteil in Form einer dünnen Blechplatte angeschweißt ist. Darüber hinaus sind vier weitere Gestellteile vorhanden, die jeweils mit ihren Längsenden auf die Querteile in deren Eckbereichen treffen und dort mit den Querteilen verschweißt sind. Zur Steuerung des Betriebs der Kontrollwaage ist eine Steuer- und Auswerteeinrichtung in einem Gehäuse untergebracht, das an seitlichen Halteplatten befestigt ist.

Das Dokument DE 10 2009 047 090 A1 offenbart ein Gestell einer Wäge-Fördervorrichtung, das modular aufgebaut ist und hierzu mehrere Aufstellelemente in Form von Blechplatten aufweist, die jeweils mittels Streben miteinander verbunden sind. Zwischen benachbarten Aufstellelementen kann auch eine Schrankeinrichtung positioniert sein, welche beispielsweise ein Steuerungsgerät und/oder Anzeigegerät aufnehmen kann. Die Schrankeinrichtung ist über separate Strebenelemente an den Aufstellelementen fixiert.

Weiterer Stand der Technik ist durch die Dokumente JP 2002 116079 A, WO 2011/030135 A1 und EP 1 524 210 A1 gegeben. Der Erfindung liegt die Aufgabe zugrunde, ein Gestell einer Wäge-Fördervorrichtung der eingangs genannten Art anzugeben, welches möglichst kompakt aufgebaut ist.

Die Aufgabe wird durch ein Gestell einer Wäge-Fördervorrichtung mit den Merkmalen des Anspruchs 1 gelöst.

Dadurch, dass sich der Schaltschrank bzw. die Breite des Schaltschranks über die gesamte Länge zwischen den beiden Seitenwangen erstreckt, kann der Schaltschrank ein tragendes Element des Gestells bilden. Insbesondere sind keine separaten Strebenelemente zwischen den Seitenwangen und den beiden Seiten des Schaltschranks erforderlich, wodurch die Stabilität des Gestells erhöht und der Montageaufwand reduziert wird. Die Breite des Schaltschranks erstreckt sich dabei in Richtung der Längserstreckung der Längsträger bzw. in Förderrichtung der Wäge-Fördervorrichtung, d.h. die Breite des Schaltschranks entspricht dem lichten Abstand zwischen den beiden Seitenwangen.

Wie vorstehend bereits erwähnt, kann der Schaltschrank ein tragendes Element, insbesondere ein tragendes hohles Profil oder eine Strebe des Gestells bilden. Tragendes Element bedeutet, dass der Schaltschrank mechanisch stabil ausgebildet ist und ohne nennenswerte Verformungen Kräfte aufnehmen kann, um beispielsweise bei mechanischen Belastungen eine Verwindung des Gestells zu verringern bzw. zu verhindern. Insbesondere können an dem Schaltschrank weitere Elemente des Gestells befestigt sein, beispielsweise ein Tragarm einer Etikettiervorrichtung und/oder einer Druckvorrichtung und/oder einer Sortiervorrichtung.

Dazu kann der Tragarm mit der Rückseite des Schaltschranks verbunden, insbesondere verschraubt werden.

In dem Schaltschrank können elektronische Komponenten wie Netzteile, speicherprogrammierbare Steuerungen (SPS), Relaiskarten und dergleichen sowie Verteiler und Kabelführungen aufgenommen werden. Vorzugsweise ist der Schaltschrank aus Blech gefertigt. Bevorzugt sind die Seitenwangen jeweils plattenförmig ausgebildet und/oder weisen eine rechteckige Grundform auf.

Das Gestell kann auch drei oder mehr Seitenwangen aufweisen, wobei der Schaltschrank grundsätzlich zwischen zwei beliebigen aufeinanderfolgenden Seitenwangen angeordnet sein kann. In einem derartigen Fall kann das Gestell modular aufgebaut sein. Zwei jeweilige Seitenwangen sowie die dazwischen angeordneten Längsträger bilden dann ein jeweiliges Modul des Gestells. Eine nicht endseitige Seitenwange des Gestells ist dann jeweils zwei aufeinanderfolgenden Modulen des Gestells zugeordnet. Die Längen der Module können dabei voneinander verschieden sein.

Der Schaltschrank weist in Richtung der Längserstreckung der Längsträger seine längste Erstreckung auf. Der Schaltschrank ist also breiter als hoch und breiter als tief. Hierdurch kann eine besonders kompakte Bauweise erreicht werden. Darüber hinaus kann der Schaltschrank eine in vertikaler Richtung orientierte Höhe aufweisen, die die Tiefe des Schaltschranks übersteigt. Außerdem kann der Schaltschrank über seine gesamte Breite einen zumindest im Wesentlichen identischen Querschnitt aufweisen.

Der Schaltschrank kann eine Oberseite, eine Rückwand und eine Unterseite aufweisen, die einstückig miteinander verbunden sind, insbesondere aus einem abgekanteten Blech gefertigt sind. Das Blech kann beispielsweise als Stahlblech, Edelstahlblech oder Aluminiumblech und/oder mit einer Wandstärke im Bereich von 2 mm bis 8 mm ausgebildet sein. Als Seitenwände des Schaltschranks können die Seitenwangen des Gestells dienen. Grundsätzlich kann der Schaltschrank aber auch eigene Seitenwände umfassen, die unmittelbar mit den Seitenwangen verbunden sind. Durch den flächigen Kontakt zwischen Schaltschrank und Seitenwangen entsteht ein besonders stabiles Gestell.

Erfindungsgemäß ist der Schaltschrank als ein seitlicher oberer Längsträger ausgebildet. Die weiteren Längsträger des Gestells bzw. des jeweiligen Moduls sind unterhalb, in Längsrichtung des Gestells weiter zur Mitte hin und/oder auf der anderen Längsseite des Gestells angeordnet. Der seitliche obere Längsträger ist für einen Bediener der Wäge-Fördervorrichtung besonders gut zugänglich.

Nach einer Ausbildung der Erfindung ist der Massenmittelpunkt des Schaltschranks in seitlicher Richtung innerhalb des durch die Seitenwangen, insbesondere durch insbesondere äußere Standfüße der Seitenwangen gebildeten Innenraums des Gestells angeordnet. Hierdurch kann ein durch den Schaltschrank auf das Gestell wirkendes seitliches Kippmoment vermieden werden. Vorzugsweise ist der Schaltschrank derart positioniert, dass er mit höchstens 20 % seiner Tiefenerstreckung über das seitliche Ende der Seitenwange nach außen hervorsteht. Dies schließt auch ein, dass der Schaltschrank nach innerhalb des seitlichen Endes der Seitenwangen versetzt positioniert ist. Gemäß einer besonderen Ausführungsform schließt der Schaltschrank zumindest im Wesentlichen bündig mit dem seitlichen Ende der Seitenwangen ab. Dies ermöglicht eine besonders platzsparende Konstruktion.

Der Schaltschrank kann unterhalb eines oberen Endes der Seitenwangen angeordnet sein. Der Blick auf ein Förderband, das im Bereich des Schaltschranks von dem Gestell getragen wird, ist daher nicht verdeckt, so dass die Wäge-Förderrichtung für einen Bediener auch von der Seite, auf der sich der Schaltschrank befindet, einsehbar ist.

Der Schaltschrank kann eine nach außen aufklappbare Klappe aufweisen, um die vorgenannten elektronischen Komponenten, Verteiler und Kabelführungen und dergleichen aufnehmen zu können. Eine Klappe ist robust und einfach bedienbar. Die Klappe kann eine umlaufende Dichtung aufweisen. Hierdurch kann der Schaltschrank abgedichtet werden.

Um das Innere des Schaltschranks vor mechanischen Einflüssen, Staub und Feuchtigkeit zu schützen, können in dem Schaltschrank ausgebildete Kabeldurchführungen mit Kabelverschraubungen und/oder Kabeldichtungen versehen sein. Bei den Kabelverschraubungen kann es sich beispielsweise um Stahlpanzerrohrgewinde handeln. Darüber hinaus kann unterhalb des Schaltschranks ein Kabelrechen angeordnet sein. Durch den Kabelrechen können in den Schaltschrank hinein- und/oder aus dem Schaltschrank herausführende Kabel übersichtlich sortiert werden.

Zumindest ein Teil der übrigen Längsträger, insbesondere alle übrigen Längsträger, insbesondere zumindest des jeweiligen Moduls, können aus Profil- oder Flachstahl und/oder als Rundrohr gebildet sein. Bevorzugt entspricht die Länge zumindest eines Teils der übrigen Längsträger der Breite des Schaltschranks, d.h. auch die übrigen Längsträger bzw. zumindest der Teil hiervon erstreckt sich über den gesamten lichten Abstand zwischen den beiden Seitenwangen.

Das Patent betrifft ferner eine Wäge-Fördervorrichtung mit einer Wägeplattform, wenigstens einem Förderband und einem Gestell, wie es vorstehend erläutert ist. Insbesondere können mehrere Förderbänder hintereinander angeordnet sein.

Vorzugsweise fallen die beiden stirnseitigen Enden des Schaltschranks in Richtung der Längserstreckung der Längsträger mit einem Förderbandanfang und einem Förderbandende zusammen, d.h. der Schaltschrank schließt mit dem Anfang bzw. Ende eines oder mehrerer Förderbänder ab.

Weitere vorteilhafte Ausgestaltungen der Erfindung sind in den Unteransprüchen, der weiteren Beschreibung und der Zeichnung beschrieben.

Die Erfindung wird im Folgenden beispielhaft unter Bezugnahme auf die Zeichnung beschrieben. Es zeigen:
- Fig. 1: eine perspektivische Ansicht einer Wäge-Fördervorrichtung mit einem erfindungsgemäßen Gestell, und
- Fig. 2: eine perspektivische Rückansicht einer Variante des erfindungsgemäßen Gestells gemäß Fig. 1, wobei eine Klappe eines Schaltschranks in geschlossener Stellung (Fig. 2a) bzw. offener Stellung (Fig. 2b) dargestellt ist.

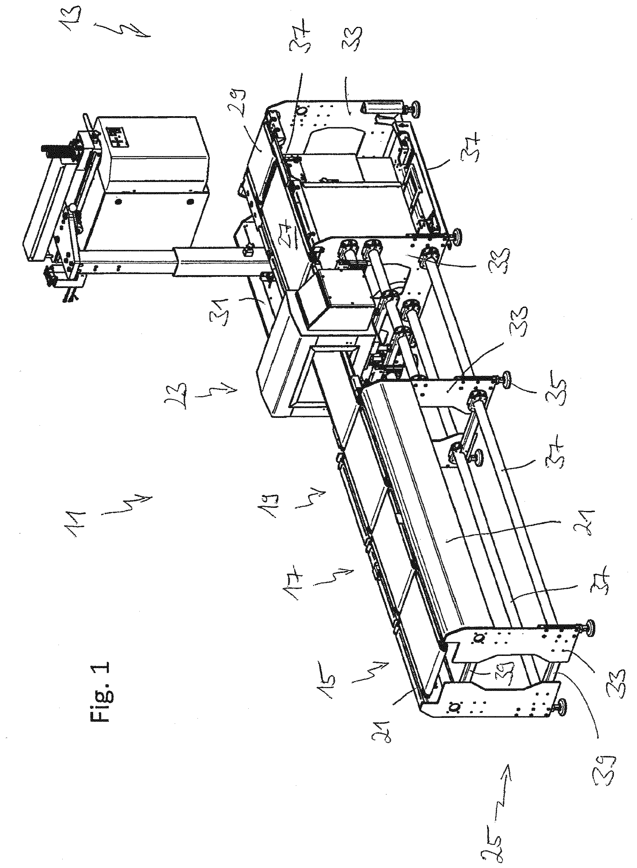

Die in Fig. 1 dargestellte Vorrichtung zeigt eine erfindungsgemäße Wäge-Fördervorrichtung 11, die ein erstes Zuführband 15, ein zweites Zuführband 17, ein Wägeband 19, einen Metalldetektor 23 und eine Druck- und Etikettiervorrichtung 13 mit zwei Förderbändern 27, 29 umfasst. Das Wägeband 19 ist mit einer unterhalb des Wägebands 19 angeordneten, nicht dargestellten Wägezelle gekoppelt, die dazu ausgelegt ist, das Gewicht eines sich über das Wägeband 19 bewegenden Stückguts zu bestimmen. Wägeband 19 und Wägezelle bilden eine Wägeplattform, die als Kontrollwaage bzw. Checkweigher oder als Preisauszeichner ausgebildet sein kann. Zu beiden Seiten der drei Transportbänder 15, 17, 19 sind Schmutzabweisbleche 21 vorgesehen.

Im Betrieb der Wäge-Fördervorrichtung 11 werden zu verwiegende Packungen von den Zuführbändern 15, 17 an das Wägeband 19 übergeben, dort gewogen und an ein Transportband des Metalldetektors 23 weitertransportiert. Anschließend werden die Packungen von der Druck- und Etikettiervorrichtung 13 übernommen und mit einem Etikett versehen, das zuvor mit dem von der Wägezelle für die jeweilige Packung ermittelten Gewicht bedruckt wurde. Der Metalldetektor 23 kann auch weggelassen werden, oder anstelle des Metalldetektors 23 oder zusätzlich hierzu kann auch beispielsweise eine Sortiereinrichtung vorgesehen sein.

Darüber hinaus umfasst die Wäge-Fördervorrichtung 11 ein Gestell 25, auf dem sich die Zuführbänder 15, 17, das Wägeband 19 mit der Wägezelle, der Metalldetektor 23 mit zugehörigem Transportband und die beiden Förderbänder 27, 29 der Druck- und Etikettiervorrichtung 13 abstützen. Das Gestell 25 umfasst mehrere Seitenwangen 33, die im Bereich der Zuführbänder 15, 17, des Wägebands 19 und des Metalldetektors 23, d.h. im Bereich eines Wägemoduls und eines Metalldetektormoduls des Gestells, über jeweils mehrere als Rundrohre ausgebildete Längsträger 37 fest miteinander verbunden sind. Die Seitenwangen 33 des Wägemoduls sind jeweils zweiteilig ausgebildet, wobei die beiden jeweiligen Seitenwangenteile über als Vierkantrohre ausgebildete Querträger 39, die an den Innenseiten der Seitenwangenteile 33 vorgesehen sind, miteinander verbunden sind. An die Seitenwangen 33 sind jeweils zwei Standfüße 35 angeschraubt, die unabhängig voneinander höhenverstellbar sind.

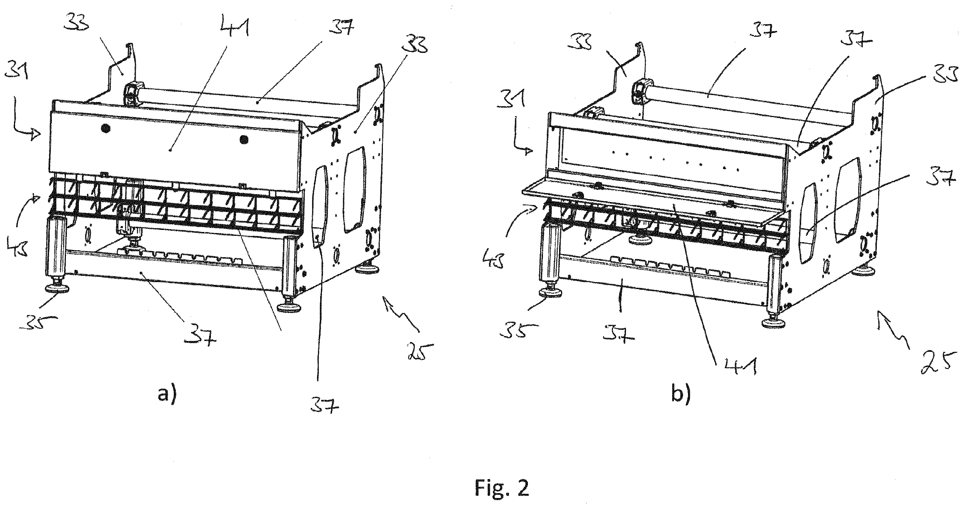

Im Bereich der Druck- und Etikettiervorrichtung 13 ist in der Ansicht gemäß Fig. 1 an der Rückseite des Gestells 25 ein Schaltschrank 31 für die Steuerung der Wäge-Fördervorrichtung 11 vorgesehen. Der Schaltschrank 31 ist Teil des in diesem Bereich erfindungsgemäß ausgebildeten Gestells 25, wie anhand der Fig. 2 nachstehend näher erläutert wird.

Das in Fig. 2 dargestellte Gestellmodul unterscheidet sich von dem entsprechenden in Fig. 1 dargestellten Gestellmodul dadurch, dass an der Gestellvorderseite (welche in Fig. 2 hinten liegt) ein oberer und ein unterer Längsträger 37 und oben mittig ein weiterer Längsträger 37 vorgesehen sind, wohingegen in Fig. 1 diese weggelassen sind, um eine vorderseitigen Auszug für einen sogenannten Bottom-Etikettierer zu realisieren. Um auch der Variante gemäß Fig. 1 eine ausreichende Stabilität zu verleihen, weist das dortige Gestell 25 vorderseitig weiter oben und unten vorgesehene, weniger Platz beanspruchende andersartige Längsträger 37 auf.

Wie aus Fig. 2 erkennbar ist, ist der obere rückseitige Längsträger des Gestells 25 (welcher in Fig. 2 vorne liegt) im Bereich der Druck- und Etikettiervorrichtung 13 als ein Schaltschrank 31 ausgebildet, in dem elektronische Komponenten, Verteiler, Kabelführungen und dergleichen aufgenommen werden können, die zur Steuerung der Wäge-Fördervorrichtung 11 erforderlich sind. Der Schaltschrank 31 ersetzt einen beispielsweise als Rundrohr ausgebildeten Längsträger und bildet damit ein tragendes Teil des Gestells 25. Dadurch, dass der Schaltschrank als Längsträger ausgebildet ist, ist das Gestell 25 besonders kompakt und platzsparend aufgebaut. Der Schaltschrank 31 erstreckt sich dabei über die gesamte Strecke zwischen den beiden Seitenwangen 33 und ist an den beiden Seitenwangen 33 befestigt. Die Breite des Schaltschranks 31 entspricht dabei dem Abstand zwischen den beiden stirnseitigen Seitenwangen 33.

Die Höhe und Tiefe des Schaltschranks 31 ist im Vergleich zu seiner Breite relativ gering. Der Schaltschrank 31 besitzt über seine Breite hinweg einen identischen Querschnitt. Der Schaltschrank 31 ist derart platziert, dass er in seitlicher Richtung nicht über die Seitenwangen 33 nach außen hervorsteht, sondern bündig mit diesen abschließt. Dadurch ist gewährleistet, dass der Schwerpunkt des Schaltschranks 31 - in seitlicher Richtung gesehen - innerhalb des durch die Seitenwangen 33, insbesondere durch die Standfüße 35 der Seitenwangen 33 gebildeten Innenraums des Gestells 25 angeordnet ist. Dies wirkt einem Kippen des Gestells 25 entgegen und trägt damit zur Stabilität des Gestells 25 bei. Ferner steht der Schaltschrank 41 nach oben nicht über die Seitenwangen 33 hervor. Unterhalb des Schaltschranks 41 ist ein als L- oder Flachprofil ausgebildeter unterer Längsträger 37 vorgesehen.

Das Innere des Schaltschranks 31 ist über eine Klappe 41 zugänglich, die in Fig. 2a in ihrer geschlossenen Position und in Fig. 2b in ihrer geöffneten Position dargestellt ist. Durch in den Wänden des Schaltschranks 31 ausgebildete, nicht dargestellte Kabeldurchführungen können Kabel hindurchgeführt werden. Um das Innere des Schaltschranks 31 nach außen hin abzudichten, sind an den Kabeldurchführungen entsprechende Kabelverschraubungen vorgesehen. Darüber hinaus ist unterhalb des Schaltschranks 41 ein Kabelrechen 43 vorgesehen, der als Sortierhilfe für die in den Schaltschrank 31 hineingeführten bzw. die aus dem Schaltschrank 31 herausgeführten Kabel dient.

Durch die Integration des Schaltschranks 31 in die tragende Struktur des Gestells 25 kann eine besonders kompakte Bauweise des Gestells bzw. des jeweiligen Moduls hiervon realisiert werden.

### Bezugszeichenliste

- 11: Wäge-Fördervorrichtung
- 13: Druck- und Etikettiervorrichtung
- 15: Zuführband
- 17: Zuführband
- 19: Wägeband
- 21: Schmutzabweisblech
- 23: Metalldetektor
- 25: Gestell
- 27: Förderband
- 29: Förderband
- 31: Schaltschrank
- 33: Seitenwange
- 35: Standfuß
- 37: Längsträger
- 39: Querträger
- 41: Klappe
- 43: Kabelrechen

## Patentansprüche

1. Gestell (25) einer Wäge-Fördervorrichtung (11) mit zwei stirnseitigen Seitenwangen (33) und mehreren die beiden Seitenwangen (33) miteinander verbindenden Längsträgern (31, 37), wobei einer der Längsträger (31, 37) als Schaltschrank (31) für die Wäge-Fördervorrichtung (11) ausgebildet ist, der sich mit seiner Breite über den gesamten lichten Abstand zwischen den beiden Seitenwangen (33) erstreckt, wobei der Schaltschrank (31) in Richtung der Längserstreckung der Längsträger (31, 37) seine längste Erstreckung aufweist,
**dadurch gekennzeichnet,**
**dass** der Schaltschrank (31) als ein seitlicher oberer Längsträger (31) ausgebildet ist.

2. Gestell nach Anspruch 1,
**dadurch gekennzeichnet,**
**dass** der Schaltschrank (31) eine Oberseite, eine Rückwand und eine Unterseite aufweist, die einstückig miteinander verbunden sind, insbesondere aus einem abgekanteten Blech gefertigt sind.

3. Gestell nach zumindest einem der vorstehenden Ansprüche,
**dadurch gekennzeichnet,**
**dass** der Massenmittelpunkt des Schaltschranks (31) in seitlicher Richtung innerhalb des durch die Seitenwangen (33), insbesondere durch Standfüße (35) der Seitenwangen (33) gebildeten Innenraums des Gestells (25) angeordnet ist.

4. Gestell nach zumindest einem der vorstehenden Ansprüche,
**dadurch gekennzeichnet,**
**dass** der Schaltschrank (31) derart positioniert ist, dass er mit höchstens 20% seiner Tiefenerstreckung über das seitliche Ende der Seitenwangen (33) nach außen hervorsteht, insbesondere bündig mit dem seitlichen Ende der Seitenwangen (33) abschließt.

5. Gestell nach zumindest einem der vorstehenden Ansprüche,
**dadurch gekennzeichnet,**
**dass** der Schaltschrank (31) unterhalb eines oberen Endes der Seitenwangen (33) angeordnet ist.

6. Gestell nach zumindest einem der vorstehenden Ansprüche,
**dadurch gekennzeichnet,**
**dass** der Schaltschrank (31) eine nach außen aufklappbare Klappe (41) aufweist.

7. Gestell nach zumindest einem der vorstehenden Ansprüche,
**dadurch gekennzeichnet,**
**dass** in dem Schaltschrank (31) ausgebildete Kabeldurchführungen mit Kabelverschraubungen und/oder Kabeldichtungen versehen sind und/oder unterhalb des Schaltschranks (31) ein Kabelrechen (43) angeordnet ist.

8. Gestell nach zumindest einem der vorstehenden Ansprüche,
**dadurch gekennzeichnet,**
**dass** zumindest ein Teil der übrigen Längsträger (37) aus Profil- oder Flachstahl und/oder als Rundrohr gebildet ist und/oder die Länge zumindest eines Teils der übrigen Längsträger (37) der Breite des Schaltschranks (31) entspricht.

9. Wäge-Fördervorrichtung (11) mit einer Wägeplattform (19), wenigstens einem Förderband (15, 17) und einem Gestell (25) nach einem der vorstehenden Ansprüche.

## Claims

1. A frame (25) of a weighing conveying apparatus (11) having two endface side elements (33) and a plurality of longitudinal members (31, 37) connecting the two side elements (33) to one another, wherein one of the longitudinal members (31, 37) is configured as a switch cabinet (31) for the weighing conveying apparatus (11) and the width of said switch cabinet (31) extends over the entire clearance between the two side elements (33), wherein the switch cabinet (31) has its longest extent in the direction of the longitudinal extent of the longitudinal members (31, 37),
**characterized in that**
the switch cabinet (31) is configured as a lateral upper longitudinal member (31).

2. A frame in accordance with claim 1,
**characterized in that**
the switch cabinet (31) has an upper side, a rear wall and a lower side which are connected to one another in one piece and which are in particular produced from a folded metal sheet.

3. A frame in accordance with at least one of the preceding claims,
**characterized in that**
the center of mass of the switch cabinet (31) is arranged in a lateral direction within the inner space of the frame (25) formed by the side elements (33), in particular by feet (35) of the side elements (33).

4. A frame in accordance with at least one of the preceding claims,
**characterized in that**
the switch cabinet (31) is positioned such that at most 20% of its depth extent projects outwardly over the lateral end of the side elements (33); and in particular such that said switch cabinet (31) terminates flush with the lateral end of the side elements (33).

5. A frame in accordance with at least one of the preceding claims,
**characterized in that**
the switch cabinet (31) is arranged beneath an upper end of the side elements (33).

6. A frame in accordance with at least one of the preceding claims,
**characterized in that**
the switch cabinet (31) has a hinged cover (41) which can be flipped open outwardly.

7. A frame in accordance with at least one of the preceding claims,
**characterized in that**
cable leadthroughs formed in the switch cabinet (31) are provided with cable glands and/or with cable seals; and/or **in that** a cable holder (43) is arranged beneath the switch cabinet (31).

8. A frame in accordance with at least one of the preceding claims,
**characterized in that**
at least some of the remaining longitudinal members (37) are formed from sectional steel or flat steel and/or as a round tube; and/or **in that** the length of at least some of the remaining longitudinal members (37) corresponds to the width of the switch cabinet (31).

9. A weighing conveying apparatus (11) comprising a weighing platform (19); at least one conveyor belt (15, 17); and a frame (25) in accordance with any one of the preceding claims.

## Revendications

1. Bâti (25) d'un dispositif de transport et de pesée (11), comportant deux joues latérales (33) du côté frontal et plusieurs supports longitudinaux (31, 37) reliant les deux joues latérales (33) l'une à l'autre, l'un des supports longitudinaux (31, 37) étant réalisé sous la forme d'une armoire de commande (31) pour le dispositif de transport et de pesée (11), dont la largeur s'étend sur toute la distance libre entre les deux joues latérales (33), l'armoire de commande (31) présentant sa plus longue extension dans la direction de l'extension longitudinale des supports longitudinaux (31, 37),
**caractérisé en ce que**
l'armoire de commande (31) est réalisée sous la forme d'un support longitudinal (31) latéral supérieur.

2. Bâti selon la revendication 1,
**caractérisé en ce que**
l'armoire de commande (31) présente une face supérieure, une paroi arrière et une face inférieure qui sont reliées entre elles en une seule pièce et qui sont fabriquées en particulier en tôle pliée.

3. Bâti selon l'une au moins des revendications précédentes,
**caractérisé en ce que**
le centre de masse de l'armoire de commande (31) est situé en direction latérale à l'intérieur de l'espace intérieur du bâti (25) formé par les joues latérales (33), en particulier par les pieds d'appui (35) des joues latérales (33).

4. Bâti selon l'une au moins des revendications précédentes,
**caractérisé en ce que**
l'armoire de commande (31) est positionnée de manière à dépasser vers l'extérieur au maximum de 20 % de son extension en profondeur au-delà de l'extrémité latérale des joues latérales (33), en particulier de manière à se terminer en affleurement avec l'extrémité latérale des joues latérales (33).

5. Bâti selon l'une au moins des revendications précédentes,
**caractérisé en ce que**
l'armoire de commande (31) est disposée au-dessous d'une extrémité supérieure des joues latérales (33).

6. Bâti selon l'une au moins des revendications précédentes,
**caractérisé en ce que**
l'armoire de commande (31) présente un volet (41) qui peut être ouvert par rabattement vers l'extérieur.

7. Bâti selon l'une au moins des revendications précédentes,
**caractérisé en ce que**
des passe-câbles réalisés dans l'armoire de commande (31) sont munis de presse-étoupes et/ou de joints de câble, et/ou
un râtelier de câble (43) est disposé au-dessous de l'armoire de commande (31).

8. Bâti selon l'une au moins des revendications précédentes,
**caractérisé en ce que**
une partie au moins des supports longitudinaux (37) restants est réalisée en acier profilé ou plat et/ou sous forme de tube rond, et/ou
la longueur d'une partie au moins des supports longitudinaux (37) restants correspond à la largeur de l'armoire de commande (31).

9. Dispositif de transport et de pesée (11) comportant une plate-forme de pesée (19), au moins une bande transporteuse (15, 17) et un bâti (25) selon l'une des revendications précédentes.
